# EUROPÄISCHE PATENTSCHRIFT

(11) **EP 0 730 727 B1**
(45) Veröffentlichungstag und Bekanntmachung des Hinweises auf die Patenterteilung: **03.02.1999**
(21) Anmeldenummer: 95902038.9
(22) Anmeldetag: 24.11.1994
(51) Int. Cl.: G01C 21/20, G07B 15/00

(54) **EINRICHTUNG IN EINEM FAHRZEUG ZUR FESTSTELLUNG DES BETRETENS EINER TEILSTRECKE EINES VORGEGEBENEN STRASSENNETZES**
DEVICE IN A VEHICULE TO DETERMINE ENTRY INTO A PARTIAL SECTION OF A PREDETERMINED ROAD SYSTEM
SYSTEME PLACE DANS UN VEHICULE POUR DETERMINER LE PASSAGE DUDIT VEHICULE SUR UN TRON ON D'UN RESEAU ROUTIER PREDEFINI

(30) Priorität: 26.11.1993 DE 4340840
(43) Veröffentlichungstag der Anmeldung: 11.09.1996
(73) Patentinhaber: MANNESMANN Aktiengesellschaft, 40213 Düsseldorf (DE)
(72) Erfinder: WIDL, Andreas, D-81667 München (DE); GINZINGER, Peter, D-83224 Grassau (DE)
(74) Vertreter: Meissner, Peter E., Dipl.-Ing.
(86) Internationale Anmeldenummer: DE9401428
(87) Internationale Veröffentlichungsnummer: WO9514908

(56) Entgegenhaltungen:
- EP-A- 0 110 171
- EP-A- 0 505 152
- DE-A- 3 609 288
- DE-A- 3 908 702
- DE-A- 4 130 367
- US-A- 4 924 402

## Beschreibung

Die Erfindung betrifft eine Einrichtung in einem Fahrzeug zur Feststellung des Betretens einer Teilstrecke eines vorgegebenen, insbesondere eines nutzungsgebührenpflichtigen Straßennetzes durch ein Fahrzeug gemäß dem Gattungsbegriff des Patentanspruchs 1.

In der nicht vorveröffentlichten DE 43 10 099 A1 ist eine Einrichtung beschrieben, die von einem Fahrzeug mitgeführt werden kann und zur Abrechnung von Straßennutzungsgebühren (z.B. Autobahnmaut) einsetzbar ist. Diese Einrichtung weist in einer bevorzugten Ausführungsform ein Empfangssystem auf für den drahtlosen Empfang von Signalen, insbesondere von Signalen für die Satellitennavigation, eine Recheneinrichtung, die zur Bestimmung der aktuellen geografischen Fahrzeugposition aus diesen Daten eingerichtet ist, femer eine Speichereinrichtung für die digitale Speicherung des nutzungsgebührenpflichtigen Straßennetzes (Landkartenspeicher) sowie eine Speichereinrichtung für die digitale Speicherung der von der Recheneinrichtung ermittelten Fahrzeugpositionsdaten und Speichereinrichtungen für Angaben zum Straßennutzungstarif sowie für die wertmäßige Verbuchung der von der Recheneinrichtung ermittelten Nutzungsdaten. Die Recheneinrichtung kann dabei anhand des fortlaufenden Vergleichs der Positionsdaten des Fahrzeugs mit den geografischen Daten des Wegstreckenverlaufs innerhalb des gebührenpflichtigen Straßennetzes ermitteln, welche Streckenabschnitte dieses Straßennetzes vom Fahrzeug benutzt wurden.

Die Angaben über die aktuelle Fahrzeugposition werden durch die entsprechenden Koordinaten (Latitude, Longitude) dieser Position eindeutig festgelegt. In entsprechender Weise liegen auch die Angaben über den Verlauf des gebührenpflichtigen Straßennetzes vor. Das bedeutet, daß das Straßennetz durch eine Vielzahl von geografischen Punkten, die gedanklich durch gerade Linien miteinander verbunden sind, in Form eines Polygonzugs als näherungsweises Modell im Speicher der Einrichtung festgelegt ist. Der Polygonzug entspricht dabei etwa dem Verlauf der Mittellinie der einzelnen Straßen im nutzungsgebührenpflichtigen Straßennetz.

Wenn sich ein Fahrzeug zunächst auf einem nutzungsgebührenfreien Verkehrsweg befindet, dann in eine Teilstrecke eines nutzungsgebührenpflichtigen Straßennetzes einfährt, kommt es für die richtige Zurechnung der fälligen Nutzungsgebühren darauf an, genau zu wissen, an welcher Stelle dieses Fahrzeug das nutzungsgebührenpflichtige Straßennetz betreten hat. Eine Schwierigkeit hierbei liegt darin, daß die Genauigkeit des verwendeten Positionsbestimmungssystems begrenzt ist und ein unmittelbarer Vergleich der Positionsdaten des Fahrzeugs mit den Daten der digitalisierten Landkarte im Regelfall keine genaue Übereinstimmung zeigen wird. So liegt etwa die Genauigkeit des Satellitennavigationssystems GPS (GLOBAL POSITIONING SYSTEM) nur bei etwa 100 m, also erheblich über der Größenordnung einer Fahrbahnbreite. Zum anderen besteht das Problem, daß aus Wirtschaftlichkeitsgründen die Prozessorleistung der in die Einrichtung des Fahrzeugs integrierten Recheneinrichtung vergleichsweise gering ist, daß aber dennoch eine schnelle Durchführung des Positionsdatenvergleichs notwendig ist.

Aus der US-A-4 924 402 ist es bekannt, die geographische Position eines Fahrzeuges unter Verwendung der Daten eines drahtlosen Empfangssystemes (GPS) zu ermitteln. Hierbei kommt auch eine Landkartenspeicherung zum Einsatz, in der die Koordinaten eines Straßennetzes abgespeichert sind.

Die Aufgabe der Erfindung besteht daher darin, eine Einrichtung in einem Fahrzeug anzugeben, die es ermöglicht, eine schnelle und hinreichend genaue Entscheidung darüber zu treffen, ob ein Fahrzeug in ein vorgegebenes, durch eine digitalisierte Landkarte definiertes Straßennetz eingefahren ist oderein Ort erreicht ist, von dem aus das Fahrzeug unmittelbar in dieses Straßennetz einfahren kann, ohne daß ein besonders leistungsfähiger Prozessor in der Recheneinrichtung der vom Fahrzeug mitgeführten Einrichtung erforderlich ist.

Die Erfindung sieht zunächst vor, daß die Koordinaten der Identifikationspunkte, die das vorgegebene Straßennetz (z.B. nutzungsgebührenpflichtiges Autobahnnetz) definieren und seinen einzelnen Verzweigungen (das sind insbesondere Ein-/Ausfahrten, Autobahnkreuze, Autobahndreiecke) zugeordnet sind, sich jeweils auf einen gemeinsamen Bezugspunkt beziehen, also absolute Koordinaten (Longitude; Latitude) darstellen. Das bedeutet, daß das Straßennetz aus Teilstrecken zusammengesetzt ist, die jeweils durch zwei unmittelbar aufeinanderfolgende Verzweigungen begrenzt, und jede Teilstrecke durch die beiden Identifikationspunkte eindeutig beschrieben ist. Besonders vorteilhaft ist es, wenn die Identifikationspunkte im Landkartenspeicher in der Weise festgelegt sind, daß sie jeweils eindeutig einer einzigen Teilstrecke zugeordnet sind. Dies wird dadurch gewährleistet, daß ein Identifikationspunkt nicht exakt im jeweiligen geometrischen Mittelpunkt einer Verzweigung angesiedelt wird, sondern um einen Mindestabstand (z.B. 100 bis 1000 m) davon entfernt innerhalb der jeweiligen Teilstrecke liegt. Daraus folgt, daß jeder Verzweigung mindestens zwei unterschiedliche Identifikationspunkte zugeordnet sind, die jeweils eindeutig innerhalb einer der von der Verzweigung abgehenden oder in diese einmündenden Teilstrecken liegen. Somit kann bereits eindeutig entschieden werden, auf welcher Seite der Verzweigung, also auf welchem Teilstück sich ein Fahrzeug befindet, wenn seine aktuelle Position mit derjenigen eines der Identifikationspunkte übereinstimmt, die die jeweilige Verzweigung charakterisieren. Die zweckmäßige Größe des Mindestabstandes richtet sich insbesondere nach der Genauigkeit des im Fahrzeug eingesetzten Positionsbestimmungssystems, d. h. der Mindestabstand muß größer als der maximale Fehler bei der Positionsbestimmung sein, wobei zwei einer Verzweigung zugeordnete Identifikationspunkte mindestens um den doppelten Fehlerbetrag voneinander beabstandet sein sollten.

In der Programmierung der Rechnereinrichtung der erfindungsgemäßen Einrichtung im Fahrzeug ist ein Suchalgorithmus zur Feststellung des Betretens einer Teilstrecke des vorgegebenen Straßennetzes, d. h. zur Feststellung des Überwechseins des Fahrzeugs von einer außerhalb liegenden Verkehrsfläche in das vorgegebene Straßennetz hinein, einbezogen, der folgende Schritte beinhaltet:
a) Es wird aus der Menge der im Landkartenspeicher enthaltenen Identifikationspunkte derjenige ausgewählt, dessen Leitkoordinate von der entsprechenden Koordinate der aktuellen Fahrzeugposition die kleinste Abweichung besitzt. Als Leitkoordinate ist eine der beiden Koordinaten fest vorgegeben, beispielsweise die Longitude.
b) Danach werden von der Recheneinrichtung alle Identifikationspunkte aus dem Landkartenspeicher ermittelt, deren Leitkoordinate sich um maximal einen vorgegebenen Schwellenwert von der entsprechenden Koordinate der aktuellen Fahrzeugposition unterscheidet. Der vorgegebene Schwellenwert sollte mindestend der Größe der bei der Bestimmung der aktuellen Fahrzeugposition auftretenden Fehlertoleranz entsprechen. Bei Einsatz eines Satellitennavigationssystems zur Positionsbestimmung liegt ein geeigneter Schwellenwert z. B. im Bereich von 30 bis 200 m, vorzugsweise von 30 bis 100 m.
c) Anschließend werden von der Recheneinrichtung die absoluten Abstände zwischen den im Schritt b) ermittelten Identifikationspunkten und der aktuellen Fahrzeugposition ermittelt.
d) Schließlich wählt die Recheneinrichtung denjenigen Identifikationspunkt aus den ermittelten Identifikationspunkten aus, der den kleinsten absoluten Abstand von der aktuellen Fahrzeugposition aufweist.

Wenn nun dieser ermittelte kleinste absolute Abstand unterhalb eines vorgegebenen Minimalabstandes liegt, erzeugt die Recheneinrichtung eine Information, die die Aussage repräsentiert, daß das Fahrzeug die Einfahrstelle für in die dem jeweiligen Identifikationspunkt zugeordnete Teilstrecke des vorgegebenen Streckennetzes erreicht hat oder bereits in diese eingefahren ist. Die Größe des vorgegebenen Minimalabstandes wird zweckmäßigerweise so gewählt, daß sie kleiner als das doppelte der Fehlertoleranz bei der Bestimmung der aktuellen Fahrzeugposition, insbesondere kleiner als diese Fehlertoleranz ist.

Eine besonders schnelle Bestimmung des Identifikationspunktes, dessen Leitkoordinate die kleinste Abweichung von der Leitkoordinate der aktuellen Fahrzeug position aufweist, läßt sich dann durchführen, wenn alle Identifikationspunkte mit einem Index jeweils nach der Größe der Leitkoordinate sortiert im Landkartenspeicher abgelegt sind. Unter dieser Voraussetzung kann innerhalb kürzester Zeit, d. h. durch wenige Datenzugriffe, beispielsweise nach dem Intervallhalbierungsverfahren der betreffende Identifikationspunkt herausgefunden werden. Ebenso lassen sich dann äußerst schnell die innerhalb des Schwellenwertes liegenden Identifikationspunkte gemäß Schritt b) auswählen, da sie mit ihren Indizes alle unmittelbar vor bzw. hinter dem gefundenen Identifikationspunkt aus Schritt a) abgespeichert sind.

Wenn auf diese Weise einmal ein Betreten des vorgegebenen Straßennetzes von der Recheneinheit festgestellt worden ist, kann diese anschließend die Fahrtroute des Fahrzeugs innerhalb dieses Straßennetzes gezielt weiterverfolgen, um festzustellen, welche Teilstrecken im einzelnen befahren werden, so daß beispielsweise eine entsprechende Abrechnung von Straßennutzungsgebühren erfolgen kann.

## Patentansprüche

1. Einrichtung in einem Fahrzeug zur Feststellung des Betretens einer Teilstrecke eines vorgegebenen, insbesondere eines nutzungsgebührenpflichtigen Straßennetzes durch das Fahrzeug,
- mit einem Empfangssystem zum drahtlosen Empfang von Signalen, insbesondere von Signalen für die Satellitennavigation, zur Bestimmung der aktuellen geografischen Position, beispielsweise Longitude und Latitude des Fahrzeugs,
- mit einer Recheneinrichtung, die zur Bestimmung der aktuellen geografischen Fahrzeugposition eingerichtet ist,
- mit einer als Landkartenspeicher ausgebildeten Speichereinrichtung für die digitale Speicherung des insbesondere nutzungsgebührenpflichtigen Straßennetzes, wobei die Koordinaten der die Verzweigungen, beispielsweise Ein- und Ausfahrten, Abzweige, Kreuzungen, des vorgegebenen Straßennetzes charakterisierenden Punkte als Identifikationspunkte gespeichert sind und
- mit einer als Positionsspeicher ausgebildeten Speichereinrichtung für die digitale Speicherung von geografischen Positionsdaten, die von der Recheneinrichtung ermittelt wurden,
dadurch gekennzeichnet,
- daß sich die Koordinaten der Identifikationspunkte auf einen gemeinsamen Bezugspunkt beziehen,
- daß die Programmierung der Recheneinrichtung einen Suchalgorithmus aufweist, der folgende Schritte beinhaltet:
a) Ermittlung des Identifikationspunktes, dessen eine Koordinate als Leitkoordinate von der entsprechenden Koordinate der aktuellen Fahrzeugposition die kleinste Abweichung besitzt,
b) Ermittlung aller Identifikationspunkte, deren Leitkoordinate sich um maximal einen vorgegebenen Schwellenwert von der entsprechenden Koordinate der aktuellen Fahrzeugposition unterscheidet,
c) Bestimmung der absoluten Abstände zwischen den im Schritt b) ermittelten Identifikationspunkten und der aktuellen Fahrzeugposition,
d) Ermittlung des Identifikationspunktes mit dem kleinsten absoluten Abstand,
- und daß die Recheneinrichtung so ausgebildet ist, daß sie den ermittelten kleinsten Abstand mit einem vorgegebenen Minimalabstand vergleicht und bei dessen Unterschreitung eine Information erzeugt, die die Aussage repräsentiert, daß das Fahrzeug die Einfahrstelle für die jeweilige Teilstrecke des vorgegebenen Straßennetzes erreicht hat oder bereits in diese eingefahren ist.

2. Einrichtung nach Anspruch 1,
dadurch gekennzeichnet,
daß die Identifikationspunkte jeweils nach der Größe der Leitkoordinate sortiert gespeichert sind.

3. Einrichtung nach Anspruch 1 oder 2,
dadurch gekennzeichnet,
daß die Longitude als Leitkoordinate zugrunde gelegt ist.

4. Einrichtung nach einem der Ansprüche 1 bis 3,
dadurch gekennzeichnet,
daß die Recheneinrichtung so ausgebildet ist, daß die die Verzweigungen charakterisierenden Identifikationspunkte jeweils um einen vorgegebenen Mindestabstand von dem exakten geometrischen Mittelpunkt der Verzweigung entfernt innerhalb einer Teilstrecke liegen und jeweils jeder mit der Verzweigung verbundenen Teilstrecke ein Identifikationspunkt für diese Verzweigung zugeordnet ist.

5. Einrichtung nach einem der Ansprüche 2 bis 4,
dadurch gekennzeichnet,
daß die Ermittlung des Identifikationspunktes mit der kleinsten Abweichung seiner Leitkoordinate von derjenigen der aktuellen Fahrzeugposition nach dem Intervallhalbierungsverfahren erfolgt.

6. Einrichtung nach einem der Ansprüche 1 bis 5,
dadurch gekennzeichnet,
daß der vorgegebene Schwellenwert in seiner Größe mindestens der Fehlertoleranz bei der Bestimmung der aktuellen Fahrzeugposition entspricht.

7. Einrichtung nach einem der Ansprüche 1 bis 6,
dadurch gekennzeichnet,
daß der vorgegebene Minimalabstand weniger als das Doppelte der Fehlertoleranz bei der Bestimmung der aktuellen Fahrzeugposition beträgt.

8. Einrichtung nach Anspruch 7,
dadurch gekennzeichnet,
daß der vorgegebene Minimalabstand kleiner ist als die Fehlertoleranz bei der Bestimmung der aktuellen Fahrzeugposition.

## Claims

1. Device in a vehicle for ascertaining entry of the vehicle to a section of a predetermined street network which is in particular subject to a toll,
■ comprising a receiver system for the wireless reception of signals, in particular signals for satellite navigation for determining the current geographical position, e.g. longitude and latitude, of the vehicle,
■ comprising a computing device set to determine the current geographical position of the vehicle,
■ comprising a store device in the form of a map store for the digital storage of the street network which is in particular subject to a toll, the coordinates of the points characterising branches, e.g. in and out junctions, branches, crossings, being stored as identification points, and
■ comprising a storage device formed as a position store for the digital storage of geographical position data, which have been determined by the computing device, characterised
■ in that the coordinates of the identification points refer to a common reference point
■ in that programming of the computing device has a search algorithm which comprises the following stages:
a) determination of the identification point, whose coordinate as a guidance coordinate has the smallest deviation from the corresponding coordinate of the current vehicle position,
b) determination of all identification points, whose guidance coordinate differs from the corresponding coordinate of the current vehicle position by a specified threshold value as a maximum,
c) determination of the absolute distances between the identification points determined in stage b) and the current vehicle position,
d) determination of the identification point with the smallest absolute distance,
■ and in that the computing device is so formed that it compares the determined smallest distance with a predetermined minimum distance and if the determined smallest distance is the smaller, a datum is generated which represents the statement that the vehicle has reached or has already entered the entrance point for the respective road section.

2. Device according to claim 1, characterised in that the identification points are stored sorted in each case according to the size of the guidance coordinate.

3. Device according to claim 1 or 2, characterised in that the longitude forms the basis as a guidance coordinate.

4. Device according to one of claims 1 to 3, characterised in that the identification points characterising the branches each lie within a road section removed by a predetermined minimum distance from the exact geometric centre point of the branch and each road section respectively connected to the branch is allocated an identification point for this branch.

5. Device according to one of claims 2 to 4, characterised in that the computing device is so formed that determination of the identification point with the smallest deviation of its guidance coordinate is effected by that of the current vehicle position after halving the interval.

6. Device according to one of claims 1 to 5, characterised in that the predetermined threshold value corresponds in size at least to the error tolerance in determining the current vehicle position.

7. Device according to one of claims 1 to 6, characterised in that the predetermined minimum distance is less that double the error tolerance in determining the current vehicle position.

8. Device according to claim 7, characterised in that the predetermined minimum distance is smaller than the error tolerance in determining the current vehicle position.

## Revendications

1. Dispositif dans un véhicule pour déterminer l'entrée par le véhicule dans une section partielle d'un réseau routier prédéfini, en particulier à péage,
- comportant un système de réception pour la réception sans fil de signaux, en particulier des signaux pour la navigation par satellite, afin de déterminer la position géographique actuelle, par exemple la longitude et la latitude du véhicule,
- comportant un dispositif de calcul qui est formé de manière à déterminer la position géographique actuelle du véhicule,
- comportant un dispositif de stockage réalisé sous forme d'une mémoire à carte géographique pour l'enregistrement numérique du réseau routier en particulier à péage, les coordonnées des points caractérisant les ramifications, par exemple les entrées et les sorties, les bifurcations et les croisements, du réseau routier prédéfini, étant enregistrées comme des points d'identification, et
- comportant un dispositif de stockage réalisé sous forme d'une mémoire de position pour l'enregistrement numérique de données de position géographique, qui sont déterminées par le dispositif de calcul,
caractérisé,
- en ce que les coordonnées des points d'identification se rapportent à un point de référence commun,
- en ce que la programmation du dispositif de calcul comporte un algorithme de recherche qui comprend les étapes suivantes :
a) détermination du point d'identification, dont l'une des coordonnées présente, comme coordonnée de direction, l'écartement le plus faible par rapport à la coordonnée correspondante de la position actuelle du véhicule,
b) détermination de tous les points d'identification, dont les coordonnées de direction se différencient, au maximum d'une valeur de seuil prédéfinie, des coordonnées correspondantes de la position actuelle du véhicule,
c) détermination des distances absolues entre les points d'identification déterminés à l'étape b) et la position actuelle du véhicule,
d) détermination du point d'identification présentant la distance absolue la plus faible,
- et en ce que le dispositif de recherche est formé de manière à comparer la distance la plus faible déterminée à une distance minimale prédéfinie et engendre, lorsqu'elle est plus faible, une information qui indique que le véhicule a atteint la zone d'entrée de la section partielle correspondante du réseau routier prédéfini ou est déjà entré dans celle-ci.

2. Dispositif selon la revendication 1,
caractérisé en ce que les points d'identification sont enregistrés à chaque fois de façon sélectionnée en fonction de la taille des coordonnées de direction.

3. Dispositif selon la revendication 1 ou 2,
caractérisé en ce que la longitude est définie comme coordonnée de direction.

4. Dispositif selon l'une des revendications 1 à 3,
caractérisé en ce que les points d'identification caractérisant les ramifications sont situés à l'intérieur de la section partielle, en étant écartés à chaque fois d'une distance minimale prédéfinie du point géométrique central exact de la ramification, et un point d'identification pour la ramification est associé à chaque fois à chacune des sections partielles reliées à la ramification.

5. Dispositif selon l'une des revendications 2 à 4,
caractérisé en ce que le dispositif de calcul est formé de sorte que la détermination du point d'identification présentant la distance la plus faible de sa coordonnée de direction de celle de la position actuelle du véhicule est réalisée selon le procédé de division par deux d'intervalles.

6. Dispositif selon l'une des revendications 1 à 5,
caractérisé en ce que la valeur de seuil prédéfinie correspond dans sa valeur au moins à la tolérance d'erreurs lors de la détermination de la position actuelle du véhicule.

7. Dispositif selon l'une des revendications 1 à 6,
caractérisé en ce que la distance minimale prédéfinie vaut moins que le double de la tolérance d'erreurs lors de la détermination de la position actuelle du véhicule.

8. Dispositif selon la revendication 7,
caractérisé en ce que la distance minimale prédéfinie est plus petite que la tolérance d'erreurs lors de la détermination de la position actuelle du véhicule.
